(19) Europäisches Patentamt
European Patent Office
Office européen des brevets

(11) **EP 4 032 993 B1**

(12) **EUROPEAN PATENT SPECIFICATION**

(45) Date of publication and mention
of the grant of the patent:
**30.10.2024 Bulletin 2024/44**

(21) Application number: **20866677.6**

(22) Date of filing: **16.09.2020**

(51) International Patent Classification (IPC):
*C21D 8/02* (2006.01)  *C22C 38/00* (2006.01)
*C22C 38/12* (2006.01)  *C22C 38/26* (2006.01)
*C22C 38/48* (2006.01)  *C21D 9/46* (2006.01)
*C21D 1/18* (2006.01)  *C22C 38/02* (2006.01)
*C22C 38/04* (2006.01)  *C22C 38/06* (2006.01)
*B22D 11/00* (2006.01)  *B22D 11/124* (2006.01)
*C22C 38/14* (2006.01)  *C22C 38/58* (2006.01)
*C21D 8/04* (2006.01)

(52) Cooperative Patent Classification (CPC):
**C21D 9/46; B22D 11/00; B22D 11/124; C21D 8/02;
C21D 8/0226; C21D 8/0426; C22C 38/00;
C22C 38/02; C22C 38/04; C22C 38/06;
C22C 38/12; C22C 38/26; C22C 38/48;**
C22C 38/14; C22C 38/58;     (Cont.)

(86) International application number:
**PCT/JP2020/034996**

(87) International publication number:
**WO 2021/054345 (25.03.2021 Gazette 2021/12)**

(54) **THICK STEEL SHEET, AND METHOD FOR PRODUCING SAME**

DICKES STAHLBLECH UND VERFAHREN ZU SEINER HERSTELLUNG

TÔLE D'ACIER ÉPAISSE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2019  JP 2019171538**

(43) Date of publication of application:
**27.07.2022  Bulletin 2022/30**

(73) Proprietor: **JFE Steel Corporation**
**Tokyo 100-0011 (JP)**

(72) Inventor: **TERAZAWA, Yusuke**
**Tokyo 100-0011 (JP)**

(74) Representative: **Grünecker Patent- und**
**Rechtsanwälte**
**PartG mbB**
**Leopoldstraße 4**
**80802 München (DE)**

(56) References cited:
**EP-A1- 3 502 295       WO-A1-2018/216665
WO-A1-2018/216665   JP-A- 2017 193 739
JP-A- 2018 024 910   JP-A- H10 237 551
JP-A- S6 320 414**

• **VAGHEFI R ET AL: "Investigating the effects of
cooling rate and casting speed on continuous
casting process using a 3D thermo-mechanical
meshless approach", ACTA MECHANICA,
SPRINGER VIENNA, VIENNA, vol. 229, no. 11, 21
August 2018 (2018-08-21), pages 4375 - 4392,
XP036627414, ISSN: 0001-5970, [retrieved on
20180821], DOI: 10.1007/S00707-018-2240-1**

EP 4 032 993 B1

(52) Cooperative Patent Classification (CPC): (Cont.)
Y02E 60/36

## Description

Technical Field

The present invention relates to a steel plate, particularly with a large thickness, that has high strength and toughness and forms a weld zone with high delayed fracture resistance. The present invention also relates to a method for manufacturing a steel plate.

Background Art

With the growth of the energy industry, offshore structures and offshore wind power generators are becoming larger, for example, to improve the efficiency of drilling marine resources and the power generation efficiency. As structures and electric generators become larger, steel plates become thicker and stronger and are required to have higher strength depending on the thickness of the steel plates. Accordingly, the amounts of alloying elements in the steel plates increase. In the ocean, steel plates used for structures and the like collide with waves and drift ice and are also required to have high toughness.

Furthermore, such a structure is partially immersed in seawater and is located in an operating environment in which hydrogen generated by a corrosion reaction of the steel plate surface layer may penetrate the steel plate and cause delayed fracture. Such delayed fracture of a steel plate is likely to occur in a microstructure with high strength and in a portion in a high stress state. In such a structure, a high cooling rate in welding of steel plates results in the formation of a microstructure with higher strength than the microstructure of the steel plate base material in the weld zone, and causes high residual stress near the weld zone after the welding. Thus, it is also required to have a characteristic against delayed fracture near a weld zone of such a structure.

It has been known that the strength of steel plates is improved by adding an alloying element and increasing the cooling rate from the austenite region to form a steel microstructure with higher strength.

It has also been known that the toughness of steel plates is improved by decreasing the grain size of the steel microstructure. For example, as described in Patent Literature 1, it has been known that controlled rolling is effective in decreasing the grain size. In the controlled rolling, rolling is performed in a non-recrystallization low-temperature range in which austenite is particularly less likely to be recrystallized, and strain introduced by the rolling is utilized for a transformation nucleus.

As a steel plate with high toughness and strength, for example, Patent Literature 2 describes a steel plate that contains on a mass percent basis adequate amounts of C, Si, Mn, P, S, Al, Nb, and Ti, wherein Cu, Ni, Cr, and Mo satisfies $0.5\% \leq Cu + Ni + Cr + Mo \leq 3.0\%$, N satisfies $1.8 \leq Ti/N \leq 4.5$, polygonal ferrite constitutes less than 10% by area, the effective crystal grain shape at the center of the thickness of the steel plate is 15 $\mu$m or less, and the standard deviation of the effective crystal grain shape is 10 $\mu$m or less. Further steel plates and methods for producing the same are disclosed in Patent Literature 3,

Patent Literature 4 and non-patent literature 1.

Citation List

Patent Literature

PTL 1: Japanese Examined Patent Application Publication No. 49-7291
PTL 2: International Publication No. WO 2014/132627
PTL 3: EP 3 502 295 A1
PTL 4: WO 2018/216665 A1

Non-patent literature 1: Vaghefi R. et al:"Investigating the effects of cooling rate and casting speed on continuous casting process using a 3D thermomechanical meshless approach", Acta Mechanica, Springer Vienna, Vienna, vol. 229, no. 11, 21 August 2018 (2019-08-21), pages 4375-4392, XP036627414, ISSN: 0001-5970, DOI: 10.1007/S00707-018-2240-1

Summary of Invention

Technical Problem

However, the techniques described in Patent Literature 1 and Patent Literature 2 are intended to improve strength and low-temperature toughness, and delayed fracture resistance in corrosive environments has not been studied.

Furthermore, as described above, according to the related art, high-strength steel plates, particularly with a large thickness, have a high alloy content and form a weld zone with very high strength. Thus, it is difficult to simultaneously achieve high delayed fracture resistance and base material strength. Furthermore, center segregation occurs at the center of the thickness of the steel plate. In the center segregation, embrittling elements, such as Mn, P, and S, which embrittles the steel microstructure, are concentrated during slab casting. Thus, delayed fracture is more likely to occur at the center of the thickness of the steel plate than in portions without segregation.

Thus, it is difficult for a steel plate, particularly with a large thickness, to simultaneously have high strength, toughness, and delayed fracture resistance.

The present invention has been made in view of the above problems and aims to provide a steel plate, particularly with a large thickness, that simultaneously has high strength and toughness and forms a weld zone with high delayed fracture resistance, and a method for manufacturing the steel plate.

The term "high strength", as used herein, refers to a yield strength of 300 MPa or more and a tensile strength of 400 MPa or more at the center of the thickness of a steel plate in a tensile test.

The term "high toughness", as used herein, refers to an impact absorbed energy of 60 J or more at the center of the thickness of the steel plate in a Charpy impact absorption test at -40°C. The impact absorbed energy is preferably 100 J or more.

The term "high delayed fracture resistance", as used herein, refers to a reduction in area of 25% or more in a hydrogen charged tensile test of a sample taken from a weld line position after welding with a heat input of 3.0 kJ/mm.

The tensile test, the Charpy impact absorption test, and the hydrogen charged tensile test can be performed by the methods described in the examples described later. Solution to Problem

As a result of extensive studies to solve the above problems, the present inventors have obtained the following findings.

First, the equivalent carbon content (Ceq) and the cooling rate in the temperature range of 700°C to 550°C in which transformation from austenite occurs were controlled to ensure the strength required depending on the thickness of the steel plate and to prevent the formation of a microstructure with very high strength in a weld zone due to excessively high hardenability.

Next, it is effective to control the rolling conditions in the non-recrystallization temperature range to decrease the grain size at the center of the thickness of the steel plate and form a microstructure with high toughness. Thus, for rolling reduction in the non-recrystallization temperature range, Nb was added which have an effect to shift the non-recrystallization temperature range of austenite to the high temperature side by solid solution Nb or fine precipitated NbC. The non-recrystallization temperature of steel containing Nb is (8250[Nb] + 770°C) or lower.

Next, to reduce the occurrence of delayed fracture in a segregation zone at the center of the thickness of the steel plate, the solidification rate in slab casting was increased to decrease the amount of alloying element segregated between dendrites and decrease the segregation of embrittling elements Mn, P, and S in the slab casting. Furthermore, center segregation of a slab in slab casting is further decreased by the redistribution effect of a segregation element due to recrystallization using rolling strain as a driving force in hot rolling. To this end, heavy-reduction rolling was performed at a total rolling reduction ratio of 25% or more in the recrystallization temperature range above (8250[Nb] + 770°C).

Next, to improve the delayed fracture resistance of a weld zone, grain refinement is also necessary in a microstructure of a welded heat affected zone. Thus, Ti was added to form TiN with an effect of suppressing grain growth during welding heat input. Furthermore, Ca was added to form a Ca inclusion that like Ti has the effect of suppressing grain growth and can be stable without forming solid solution even near a weld line where the temperature rises just below the melting point.

Thus, it was found that even a steel plate, particularly with a large thickness, can simultaneously have high strength and toughness and form a weld zone with high delayed fracture resistance by controlling Ceq and the cooling rate between 700°C and 550°C depending on the thickness of the steel plate, by decreasing the size of the steel plate microstructure (base material microstructure) by rolling reduction in the non-recrystallization temperature range, by decreasing segregation at the center of the thickness in slab casting and hot rolling, and by adding an alloying element with the effect of decreasing the size of the microstructure of a welded heat affected zone.

The present invention has been made on the basis of these findings, and the present invention is as specified in the appended claims.

The present invention can provide a steel plate, particularly with a large thickness, that simultaneously has high strength and toughness and forms a weld zone with high delayed fracture resistance, and a method for manufacturing the steel plate.

A steel plate according to the present invention can be applied to not only offshore structures and offshore wind power generation but also shipbuilding, line pipes, and buildings, for example.

Description of Embodiments

The present invention is described in detail below. The present invention is not limited to the following embodiments.

First, the chemical composition and steel microstructure of a steel plate according to the present invention are described below.

[Chemical Composition]

In the present invention, it is important that a steel plate and a steel material used to manufacture the steel plate have the above chemical composition. The following are the reasons for limiting the chemical composition of a steel material in the present invention as described above. Unless otherwise specified, "%" of a chemical component, as used herein, refers to "% by mass".

C: 0.04% to 0.12%

C is an element that can improve the strength of a steel plate at the lowest cost and contributes to strengthening austenite grain boundaries. A C content of less than 0.04% results in low austenite grain boundary strength, hot cracking of a slab, and consequently significantly low productivity. On the other hand, a C content of more than 0.12% results in a weld zone with increased strength and consequently with low delayed fracture resistance. Thus, the C content ranges from 0.04% to 0.12%. The C content is preferably 0.05% or more and preferably 0.11% or less, more preferably 0.06% or more, and more preferably 0.10% or less.

Si: 0.03% to 0.70%

Although Si is an element effective for deoxidization, a sufficient effect cannot be achieved at a Si content of less than 0.03%. However, a Si content of more than 0.70% results in poor weldability. Thus, the Si content ranges from 0.03% to 0.70%. The Si content is preferably 0.04% or more and preferably 0.60% or less, more preferably 0.05% or more, and more preferably 0.55% or less.

Mn: 0.30% to 2.30%

Mn is an element that can improve the hardenability and strength of steel at low cost. These effects require a Mn content of 0.30% or more. However, a Mn content of more than 2.30% results in a high Mn content and low delayed fracture resistance in a segregation zone at the center of the thickness of the steel plate. Thus, the Mn content ranges from 0.30% to 2.30%. The Mn content is preferably 0.50% or more and preferably 2.10% or less, more preferably 0.70% or more, and more preferably 2.00% or less.

P: 0.020% or less

P is an element that significantly embrittles grain boundaries and tends to segregate at the center of the thickness of the steel plate. Thus, a high P content results in steel with low toughness and delayed fracture resistance. Thus, the P content is 0.020% or less. On the other hand, less P is preferred, and the lower limit of the P content may be, but is not limited to, 0%. However, P is an element inevitably contained in steel as an impurity, and an excessively low P content results in an increase in refining time and cost. Thus, the P content is preferably 0.001% or more.

S: 0.0050% or less

S is an element that significantly embrittles grain boundaries and tends to segregate at the center of the thickness of the steel plate. Thus, a high S content results in steel with low toughness and delayed fracture resistance. Thus, the S content is 0.0050% or less. On the other hand, less S is preferred, and the lower limit of the S content may be, but is not limited to, 0%. However, S is an element inevitably contained in steel as an impurity, and an excessively low S content results in an increase in refining time and cost. Thus, the S content is preferably 0.0001% or more.

Nb: 0.005% to 0.100%

Nb is an element that suppresses recrystallization as solid solution Nb or fine precipitated NbC when strain is applied to austenite and that contributes to grain refining because stored strain acts as a transformation nucleus for ferrite or the like. These effects require a Nb content of 0.005% or more. However, a Nb content of more than 0.100% results in poor weldability. Thus, the Nb content ranges from 0.005% to 0.100%. The Nb content is preferably 0.007% or more and preferably 0.075% or less, more preferably 0.009% or more, and more preferably 0.060% or less.

Ti: 0.005% to 0.100%

Ti is an element that precipitates as TiN and thereby has the effects of pinning the movement of grain boundaries and suppressing grain growth. These effects are particularly significant near a weld zone. These effects require a Ti content of 0.005% or more. However, a Ti content of more than 0.100% results in a steel material or steel plate with low cleanliness and consequently with low ductility and toughness. Thus, the Ti content ranges from 0.005% to 0.100%. The Ti content is preferably 0.006% or more and preferably 0.075% or less, more preferably 0.008% or more, and more preferably 0.065% or less.

Al: 0.001% to 0.100%

Al is an element that is effective as a deoxidizing agent and has the effect of forming a nitride and decreasing the austenite grain size. These effects require an Al content of 0.001% or more. However, an Al content of more than 0.100% results in a steel material or steel plate with low cleanliness and consequently with low ductility and toughness. Thus, the Al content ranges from 0.001% to 0.100%. The Al content is preferably 0.005% or more and preferably 0.080% or less.

Ca: 0.0005% to 0.0200%

Ca is an element that forms an oxysulfide with high stability at high temperatures and thereby has the effect of suppressing grain growth, particularly a large effect of suppressing grain growth just near a weld line where the temperature rises just below the melting point by multipass welding. Ca is also an element that has the effects of fixing S dissolved in a segregation zone at the center of the thickness of the steel plate as sulfide and rendering S harmless. The S has a great influence on the degradation of delayed fracture resistance. These effects require a Ca content of 0.0005% or more. However, a Ca content of more than 0.0200% results in a steel material or steel plate with low cleanliness and a steel plate with low toughness. Thus, the Ca content ranges from 0.0005% to 0.0200%. The Ca content is preferably 0.0006% or more. The Ca content is preferably 0.0180% or less, more preferably 0.0150% or less.

O: 0.01% or less

O is an element that lowers ductility and toughness, and therefore the O content is 0.01% or less. Less O is preferred, and the lower limit of the O content may be, but is not limited to, 0%. However, O is an element inevitably contained in steel as an impurity, and an excessively low O content results in an increase in refining time and cost. Thus, the O content is preferably 0.0005% or more.

N: 0.01% or less

N is an element that lowers ductility and toughness, and therefore the N content is 0.01% or less. Less N is preferred, and the lower limit of the N content may be, but is not limited to, 0%. However, N is an element inevitably contained in steel as an impurity, and the N content may industrially be more than 0%. An excessively low N content results in an increase in refining time and cost. Thus, the N content is preferably 0.0005% or more.
A steel plate according to the present invention contains these components, and the remainder is composed of Fe and incidental impurities.
A steel plate according to the present invention contains these components as a basic chemical composition. Although these essential elements can provide the characteristics desired in the present invention, if necessary, the following elements may be contained to further improve the strength, toughness, and delayed fracture resistance of a steel plate base material or a weld zone.
One or two or more selected from the group consisting of Cu: 2.00% or less, Ni: 2.50% or less, Cr: 1.50% or less, Mo: 1.00% or less, V: 0.30% or less, B: 0.0100% or less, W: 0.50% or less, Mg: 0.0200% or less, and REM: 0.0500% or less Cu: 2.00% or less

Cu is an element that can improve the strength of a steel plate without great degradation of the base material and toughness. However, a Cu content of more than 2.00% results in a hot cracking problem of a slab or steel plate caused by a Cu-enriched layer formed directly under a scale. Thus, when Cu is contained, the Cu content is preferably 2.00% or less, more preferably 0.01% or more, and more preferably 1.50% or less, still more preferably 0.15% or more, and still more preferably 1.00% or less.

Ni: 2.50% or less

Ni is an element that has the effects of enhancing the hardenability of steel and improving the toughness of the steel. However, a Ni content of more than 2.50% results in the problem of increased manufacturing costs. Thus, when Ni is contained, the Ni content is preferably 2.50% or less, more preferably 0.01% or more, and more preferably 2.00% or less, still more preferably 0.20% or more, and still more preferably 1.70% or less.

Cr: 1.50% or less

Cr is an element that can improve the hardenability of steel and thereby improve the strength of a steel plate. However, a Cr content of more than 1.50% results in poor weldability. Thus, when Cr is contained, the Cr content is 1.50% or less, more preferably 0.01% or more, and more preferably 1.20% or less, still more preferably 0.20% or more, and still more preferably 0.80% or less.

Mo: 1.00% or less

Mo is an element that can improve the hardenability of steel and thereby improve the strength of a steel plate. However, a Mo content of more than 1.00% results in poor weldability. Thus, when Mo is contained, the Mo content is 1.00% or less, more preferably 0.01% or more, and more preferably 0.80% or less, still more preferably 0.05% or more, and still more preferably 0.60% or less.

V: 0.30% or less

V is an element that can improve not only the hardenability of steel but also the strength of a steel plate due to the formation of carbonitride. However, a V content of more than 0.30% results in poor weldability. Thus, when V is contained, the V content is 0.30% or less, more preferably 0.01% or more, and more preferably 0.25% or less, still more preferably 0.02% or more, and still more preferably 0.08% or less.

B: 0.0100% or less

B is an element that is added in a trace amount to have the effects of improving hardenability and improving the strength of a steel plate. However, a B content of more than 0.0100% results in poor weldability. Thus, when B is contained, the B content is 0.0100% or less, more preferably 0.0001% or more, and more preferably 0.0070% or less, still more preferably 0.0005% or more, and still more preferably 0.0040% or less.

W: 0.50% or less

W is an element that can improve the hardenability of steel and thereby improve the strength of a steel plate. However, a W content of more than 0.50% results in poor weldability. Thus, when W is contained, the W content is 0.50% or less, more preferably 0.01% or more, and more preferably 0.40% or less, still more preferably 0.10% or more, and still more preferably 0.35% or less.

Mg: 0.0200% or less

Mg is an element that forms an oxysulfide with high stability at high temperatures and thereby improves weldability. At a Mg content of more than 0.0200%, however, the effects of adding Mg are saturated and the effects cannot be commensurate with the Mg content, which is economically disadvantageous. Thus, when Mg is contained, the Mg content is 0.0200% or less, preferably 0.0001% or more, and preferably 0.0180% or less, more preferably 0.0010% or more, and more preferably 0.0060% or less.

REM: 0.0500% or less

Rare-earth metal (REM) is an element that forms an oxysulfide with high stability at high temperatures and thereby improves weldability. At a REM content of more than 0.0500%, however, the effects of adding REM are saturated and the effects cannot be commensurate with the REM content, which is economically disadvantageous. Thus, when REM is contained, the REM content is 0.0500% or less, preferably 0.0001% or more, and preferably 0.0450% or less, more preferably 0.0020% or more, and more preferably 0.0100% or less.

The chemical composition of the steel plate must satisfy the following additional conditions.

Relationship between Ceq and plate thickness t [mm]: $0.0004t + 0.25 \leq Ceq \leq 0.55$

Ceq defined by the following formula (1) is a measure of hardenability due to elements contained. To form a high-strength microstructure desired in the present invention, it is necessary to control the cooling rate of the steel plate, that is, the amount of alloy to be added depending on the thickness of the steel plate. Required strength cannot be achieved at Ceq of less than $(0.0004t + 0.25)$. On the other hand, Ceq of more than 0.55 results in a weld zone microstructure with excessively high strength and a weld zone with low delayed fracture resistance. Thus, Ceq satisfies $0.0004t + 0.25 \leq Ceq \leq 0.55$. Ceq is preferably $(0.0004t + 0.26)$ or more, and preferably 0.51 or less, more preferably $(0.0004t + 0.27)$ or more and 0.50 or less.

$$Ceq = [C] + [Mn]/6 + ([Cr] + [Mo] + [V])/5 + ([Cu] + [Ni])/15$$

Each element symbol in the formula (1) denotes the corresponding element content (% by mass) and is 0 in the absence of the element.

[Steel Microstructure]

In addition to having the chemical composition, a steel plate according to the present invention has a steel microstructure in which the average grain size at the center of the thickness of the steel plate is 20 $\mu$m or less, and the concentration of Mn, the concentration of P, and the concentration of S in a segregation zone at the center of the thickness of the steel plate satisfy the following formula (2). The following are the reasons for limiting the steel microstructure in the present invention as described above.

Average grain size at the center of the thickness: 20 $\mu$m or less

The toughness at the center of the thickness of the steel plate increases with decreasing grain size of the steel microstructure at the center of the thickness of the steel plate. To produce this effect, the average grain size at the above position of the steel plate must be 20 $\mu$m or less. Thus, the average grain size at the center of the thickness of the steel plate is set to 20 $\mu$m or less, preferably 15 $\mu$m or less.

The grain size is preferably smaller, as described above, and therefore the average grain size does not have a particular lower limit. The average grain size at the above position is preferably 1 $\mu$m or more, more preferably 5 $\mu$m or more, in terms of manufacturing costs.

The phrase "the center of the thickness", as used herein, refers to a position at half the thickness of the steel plate. The phrase "the average grain size at the center of the thickness of the steel plate", as used herein, refers to the average of all crystal grains at the center of the thickness of the steel plate, wherein each crystal grain is defined by a region surrounded by a boundary with a crystal orientation difference of 15 degrees or more. The average grain size can be determined by the method described later in the examples.

The concentration of Mn, the concentration of P, and the concentration of S in a segregation zone at the center of the thickness of the steel plate:

$$[Mn*] + 20[P*] + 50[S*] \leq 15 \quad (2)$$

Each element symbol in the formula (2) denotes the concentration (% by mass) of the corresponding element in a segregation zone at the center of the thickness of the steel plate and is 0 in the absence of the element.

Mn, P, and S are elements that reduce the delayed fracture resistance to different extents depending on each element. As described above, center segregation (a segregation zone at the center of the thickness of the steel plate) in which embrittling elements, such as Mn, P, and S, are concentrated during slab casting exists at the center of the thickness of the steel plate. Thus, it is important to appropriately control the conditions for slab casting or hot rolling to reduce the center segregation remaining in the steel plate. In the present invention, it has been found that the reduction in a segregation zone at the center of the thickness of the steel plate can be estimated from each element content using the formula (2).

In the present invention, the delayed fracture resistance decreases when the value of the left side of the formula (2) ([Mn*] + 20[P*] + 50[S*]) exceeds 15. Thus, the value of ([Mn*] + 20[P*] + 50[S*]) was set to 15 or less. In the present invention, the lower limit of ([Mn*] + 20[P*] + 50[S*]) is preferably, but not limited to, 3 or more, preferably 14 or less, more preferably 5 or more, in terms of manufacturing costs.

The concentration of Mn ([Mn*]), the concentration of P ([P*]), and the concentration of S ([S*]) in a segregation zone at the center of the thickness of the steel plate can be measured by the method described later in the examples.

The term "steel plate", as used herein, refers to a steel plate with a thickness of 6 mm or more. The thickness of the steel plate is preferably more than 80 mm, more preferably 90 mm or more. The upper limit of the thickness is preferably, but not limited to, 180 mm or less.

[Manufacturing Method]

A method for manufacturing a steel plate according to an embodiment of the present invention is described below.

A steel plate according to the present invention is manufactured by continuously casting a slab (steel material) with the above chemical composition under the above conditions, then hot-rolling under the above conditions, and then cooling under the above conditions. The cooling may be followed by an optional tempering process.

The details are described below. In the following description of the manufacturing method, unless otherwise specified, the temperature expressed in "°C" is the surface temperature of a slab or steel plate. The surface temperature can be measured with a radiation thermometer or the like, for example. The temperature at the center of the thickness (at half the thickness) of a slab or steel plate can be determined, for example, by measuring the temperature at the center of the thickness of the steel plate with a thermocouple or by calculating the temperature distribution in a cross section of the steel plate by heat transfer analysis and correcting the result by the surface temperature of the steel plate.

In the present invention, a slab can be melted by any method, for example, by a known melting method using a converter, an electric furnace, a vacuum melting furnace, or the like. A slab is produced in desired dimensions, for example, by a continuous casting process. The molten steel may be further subjected to secondary refining, such as ladle refining.

As described above, a slab produced at an average cooling rate of 0.10°C/s or more in the temperature range of 1600°C to 1500°C at the center of the thickness of the slab in continuous casting is heated in the temperature range of 1000°C to 1200°C.

Average cooling rate in the temperature range of 1600°C to 1500°C at the center of the thickness of the slab in continuous casting: 0.10°C/s or more

As described above, in the present invention, it is important to appropriately control the solidification rate in slab casting to reduce the occurrence of delayed fracture in a segregation zone at the center of the thickness of the steel plate. An increase in cooling rate in the solidification of molten steel decreases the distance between dendrites and reduces the segregation of alloying element between dendrites. This effect requires an average cooling rate of 0.10°C/s or more in the temperature range of 1600°C to 1500°C, in which solidification occurs. 0.15°C/s or more is preferred for a larger effect of improving the delayed fracture resistance. The upper limit of the average cooling rate in the temperature range of 1600°C to 1500°C is preferably, but not limited to, 2°C/s or less, more preferably 0.70°C/s or less, in terms of manufacturing costs. For example, the amount of cooling water is preferably controlled to achieve the average cooling rate.

Heating temperature of slab: 1000°C to 1200°C

When the heating temperature of a slab is less than 1000°C, coarse NbC precipitated in the slab during slab casting is not redissolved and remains. Consequently, it is impossible to produce the effect of lowering the temperature in the non-recrystallization temperature range by solid solution Nb or fine NbC reprecipitated during hot rolling. On the other hand, when the heating temperature of the slab is more than 1200°C, the grain growth of austenite increases the grain size at the beginning of hot rolling. This increases the grain size of the final microstructure after the hot rolling and decreases the toughness. Thus, the heating temperature of the slab was set in the temperature range of 1000°C to 1200°C, preferably 1020°C or more, preferably 1180°C or less.

In the present invention, after the slab is produced, for example, the slab may be once cooled to room temperature and then heated again, or may be placed in a furnace as a hot piece without cooling to room temperature, or may be slightly thermally insulated and then immediately rolled.

The heated slab is then hot rolled. The hot rolling is performed at a total rolling reduction ratio of 25% or more in the temperature range in which the temperature at the center of the thickness of the slab is above (8250[Nb] + 770°C) and at a total rolling reduction ratio of 25% or more in the temperature range in which the temperature at the center of the thickness of the slab is $(8250[Nb] + 770°C)$ or lower. The temperature range above $(8250[Nb] + 770°C)$ at the center of the thickness of the slab is herein referred to as a recrystallization temperature range, and the temperature range of $(8250[Nb] + 770°C)$ to an $A_{r3}$ point at the center of the thickness of the slab is herein referred to as a non-recrystallization temperature range. The $[Nb]$ denotes the Nb content (% by mass).

Rolling conditions in the recrystallization temperature range at the center of the thickness of the steel plate: a total rolling reduction ratio of 25% or more in the temperature range above $(8250[Nb] + 770°C)$

Recrystallization of austenite grains occurs when rolling strain is applied at the center of the thickness of the steel plate in the recrystallization temperature range above $(8250[Nb] + 770°C)$. This decreases the size of the microstructure, causes the redistribution of a segregation element associated with the progress of recrystallization, and reduces center segregation present in slab casting. These effects require rolling reduction at a total rolling reduction ratio of 25% or more, preferably 28% or more, in the temperature range in which the temperature at the center of the thickness of the steel plate is above $(8250[Nb] + 770°C)$. The upper limit is preferably, but not limited to, 200% or less, more preferably 100% or less, in terms of rolling efficiency.

The total rolling reduction ratio in the recrystallization temperature range is calculated by total rolling reduction ratio = $(r_0 - r_1)/r_0 \times 100$ (%) in the temperature range above $(8250[Nb] + 770°C)$, wherein $r_0$ denotes the thickness at which the first rolling is started, and $r_1$ denotes the thickness after the final rolling.

Rolling conditions in the non-recrystallization temperature range at the center of the thickness of the steel plate: a total rolling reduction ratio of 25% or more in the temperature range of $(8250[Nb] + 770°C)$ or lower

Rolling reduction is performed at a total rolling reduction ratio of 25% or more in the temperature range in which the center of the thickness of the steel plate is in the non-recrystallization temperature range of $(8250[Nb] + 770°C)$ to the $A_{r3}$ point to introduce processing strain into austenite at the center of the thickness of the steel plate. This acts as a transformation nucleus in the final cooling described later and forms a fine microstructure with high toughness. Thus, the total rolling reduction ratio in the temperature range in which the temperature at the center of the thickness of the steel plate was $(8250[Nb] + 770°C)$ or lower was set to 25% or more, preferably 30% or more. From the perspective of rolling efficiency, the total rolling reduction ratio in this temperature range is preferably 80% or less, more preferably 70% or less.

The total rolling reduction ratio in the non-recrystallization temperature range is calculated by total rolling reduction ratio = $(r_2 - r_3)/r_2 \times 100$ (%), wherein $r_2$ denotes the thickness at which the first rolling is started in the temperature range of $(8250[Nb] + 770°C)$ or lower, and $r_3$ denotes the thickness after the final rolling is performed in the temperature range of $(8250[Nb] + 770°C)$ or lower and the $A_{r3}$ point or higher. The $A_{r3}$ point can be determined by a Formaster test or the like.

After the hot rolling, the steel plate is cooled. The steel plate is cooled at an average cooling rate of $2500 \times t^{-1.7}$°C/s or more in the temperature range of 700°C to 550°C at the center of the thickness of the steel plate, wherein t [mm] denotes the thickness of the steel plate after the hot rolling. The cooling method may be water cooling by which water is ejected from a nozzle. In the present invention, a cooling operation (treatment) is preferably performed on both sides of the steel plate such that both sides of the steel plate are cooled under the same conditions.

Average cooling rate in the temperature range of 700°C to 550°C at the center of the thickness of the steel plate: $2500 \times t^{-1.7}$°C/s or more

As described above, in the present invention, it is important to appropriately control the cooling rate in the temperature range of 700°C to 550°C at the center of the thickness of the steel plate.

When the average cooling rate in the temperature range of 700°C to 550°C at the center of the thickness of the steel plate after the hot rolling is below $2500 \times t^{-1.7}$°C/s, the strength desired in the present invention cannot be achieved due to an insufficient cooling rate in the temperature range in which austenite is transformed to a low-temperature transformation microstructure. Thus, the average cooling rate in the temperature range of 700°C to 550°C at the center of the thickness of the steel plate was set to $2500 \times t^{-1.7}$°C/s or more, preferably $2800 \times t^{-1.7}$°C/s or more, and in terms of the cost of cooling equipment preferably $15000 \times t^{-1.7}$°C/s or less. The average cooling rate during the cooling is a value (°C/s) calculated by ((the temperature of the center of the steel plate before the cooling - the temperature of the center of the steel plate after the cooling)/cooling time).

In the present invention, if necessary, the cooling can be followed by tempering to further improve the strength and toughness. In such a case, the steel plate is tempered at a tempering temperature of 650°C or less.

Tempering temperature: 650°C or less

At a tempering temperature above 650°C, the required strength may not be achieved due to significant softening. Thus, the tempering temperature is preferably 650°C or less. The lower limit of the tempering temperature is preferably, but not limited to, 200°C or more, more preferably 300°C or more, and more preferably 640°C or less. The tempering time can be appropriately adjusted. The term "tempering temperature", as used herein, refers to the temperature of the surface of the steel plate.

EXAMPLES

The present invention is more specifically described in the following examples. It should be noted that the following examples are preferred examples of the present invention, and the present invention is not limited to these examples.

First, molten steel with the chemical composition shown in Table 1 was obtained by steelmaking to produce a steel material (slab) by continuous casting. Blanks in Table 1 represent no intentional addition and include not only additive-free (0%) but also incidental inclusion. The cooling rate in the continuous casting was shown in Table 2. As described above, the cooling rate of the slab is an average cooling rate determined from a value (the temperature at the center of the thickness of the steel plate) determined by calculation in heat transfer analysis. Rolling reduction was performed at a rolling reduction gradient of 0.3 mm/m or more with a continuous casting machine in the temperature range of 1600°C to 1500°C at the center of the thickness of the slab during the continuous casting.

The slab was then sequentially subjected to heating, hot rolling, and cooling processes to manufacture a steel plate with a thickness t (mm) shown in Table 2. Some of the steel plates were reheated for tempering after the cooling. Table 2 shows manufacturing conditions in each process. Cooling after the hot rolling was performed by spraying water at a high flow rate on the top and bottom sides of the steel plate. The surface layer temperature of the steel plate was measured with a radiation thermometer. The temperature at the center of the thickness of the steel plate was measured by attaching a thermocouple to the center of the thickness of the steel plate.

The steel plate thus manufactured was measured in terms of the average grain size, the temperature at the $A_{r3}$ point, and the Mn, P, and S contents in a segregation zone at the center of the thickness of the steel plate by the methods described below, and was subjected to a tensile test, a Charpy impact absorption test, and a hydrogen charged tensile test. Table 3 shows the measurement and test results.

[Average Grain Size]

Samples were taken from each steel plate such that the test surface was a longitudinal cross section located at the middle position in the longitudinal direction and the width direction of the steel plate and at the center of the thickness of the steel plate. A surface of each sample was mirror-polished with colloidal silica finishing and was examined by a backscattered electron diffraction method (EBSP) under the following conditions. The measurement area was 300 $\mu$m in the thickness direction $\times$ 400 $\mu$m in the longitudinal direction, and the measurement step size was 1 $\mu$m. The equivalent circular diameter of a microstructure surrounded by a high-angle grain boundary with a crystal orientation difference of 15 degrees or more from an adjacent crystal grain was determined from a crystal orientation map thus obtained. The average of the equivalent circular diameters in the measurement area was defined as the average grain size.

[Temperature at $A_{r3}$ Point]

Formaster test specimens were taken from each slab at a 1/4t thickness position. In the Formaster test, after heating from room temperature to 1000°C at 10°C/s, the temperature at the $A_{r3}$ point in the course of cooling from 1000°C to room temperature at 0.1°C/s was measured in the Formaster test specimens and was used for evaluation.

[Amounts of Mn, P, and S in Segregation Zone at Center of Thickness of Steel Plate]

A rectangular parallelepiped sample 500 mm in length in the width direction and 3 mm in thickness in the thickness direction was cut out from each steel plate at the center of the thickness of the steel plate at the middle position in the longitudinal direction and the width direction of the steel plate. The cut sample was further cut into 20 equal parts in the width direction to produce 20 test samples 25 mm in length in the width direction. A surface of the test sample perpendicular to the rolling direction (25 mm in length in the width direction $\times$ 3 mm in thickness in the thickness direction) was then mirror-polished, and the mirror-polished surface was used as a measurement surface. The measurement surface was immediately quantitatively analyzed with an electron probe microanalyzer (EPMA) by a calibration curve method.

The conditions for the EPMA measurement are described below. The maximum value of [Mn*] + 20[P*] + 50[S*] in the following measurement range was determined in the test samples (20 samples) and was used for evaluation. Measurement points containing sulfide in the measurement range were excluded from the evaluation.

(EPMA measurement conditions)

Accelerating voltage: 20 kV
Irradiation current: 0.5 µA
Integration time: 0.15 seconds
Beam diameter: 15 µm
Measurement range: 3 mm in length in thickness direction $\times$ 25 mm in length in width direction
Number of measurements: 20 samples

[Tensile Test]

Tensile test specimens were taken from the center of the thickness (half the thickness) of each steel plate at the middle position in the longitudinal direction and the width direction of the steel plate such that the longitudinal direction of each tensile test specimen was parallel to the rolling direction of the steel plate. The yield strength (YS) and tensile strength (TS) of the tensile test specimens were then measured in a tensile test according to JIS Z 2241 (2011). The tensile test specimens had a JIS No. 4 shape.

[Charpy Impact Absorption Test]

Charpy impact test specimens were taken from each steel plate at the middle position in the longitudinal direction and the width direction of the steel plate. The Charpy impact test specimens were taken at the position 1 mm below the surface layer and at the center of the thickness (half the thickness) such that the longitudinal direction of each Charpy impact test specimen was parallel to the width direction of the steel plate. The impact absorbed energy of each Charpy impact test specimen was then determined by a Charpy impact absorption test according to JIS Z 2242 (2018). The Charpy impact test specimens were V-notched standard test specimens. The average of the results of three Charpy impact test specimens tested at -40°C was used for evaluation.

[Delayed Fracture Resistance Evaluation Test]

The delayed fracture resistance was evaluated in a hydrogen charged tensile test described below. A welded joint was formed from steel plates under the following conditions.

Welding direction: parallel to rolling direction

Groove shape: single bevel groove or double bevel groove
Welding method: submerged arc welding
Welding material: PFH-55LT/US-36J
Welding heat input: 3.0 kJ/mm
Preheating temperature: 150°C
Interpass temperature: 150°C

A JIS 14A round bar tensile test specimen (JIS Z 2241 (2011)) with a parallel portion diameter of 5 mm and a parallel portion length of 30 mm was taken from the welded joint at the center of the thickness of the welding line on the straight side such that the longitudinal direction of the test specimen was parallel to the welding direction. Furthermore, the round bar tensile test specimen was immersed in 10% aqueous ammonium thiocyanate at 25°C for 72 hours to absorb hydrogen into the round bar tensile test specimen. To prevent hydrogen release from the round bar tensile test specimen, the surface of the round bar tensile test specimen was galvanized in a thickness of 10 to 15 µm in a plating bath composed of $ZnCl_2$ and $NH_4Cl$. The round bar tensile test specimen was then subjected to a tensile test at a strain rate of $1.1 \times 10^{-5}$ /s, and the reduction in area after fracture was measured in accordance with JIS Z 2241 (2011). The tensile test was performed three times, and the average reduction in area was used for evaluation. The total hydrogen release (ppm) from a sample that absorbed hydrogen under the same conditions as the tensile test specimen was measured with a temperature-programmed hydrogen analyzer while heating to 400°C. The values ranged from 1.4 to 2.5 ppm.

[Table 1]

| Steel grade | Chemical composition (mass %) *1 | | | | | | | | | | | | | | | | | | | | | Notes |
|---|---|---|---|---|---|---|---|---|---|---|---|---|---|---|---|---|---|---|---|---|---|---|
| | C | Si | Mn | P | S | Nb | Ti | Al | Ca | O | N | Cu | Ni | Cr | Mo | V | W | B | Mg | REM | Ceq. | |
| A | 0.06 | 0.43 | 1.40 | 0.004 | 0.0038 | 0.038 | 0.008 | 0.024 | 0.0031 | 0.0020 | 0.0048 | | | | | | | | | | 0.29 | Example |
| B | 0.12 | 0.17 | 1.86 | 0.017 | 0.0043 | 0.014 | 0.015 | 0.061 | 0.0012 | 0.0065 | 0.0023 | | | | | | | | | | 0.43 | Example |
| C | 0.09 | 0.05 | 2.25 | 0.006 | 0.0010 | 0.030 | 0.068 | 0.013 | 0.0075 | 0.0046 | 0.0011 | | | | | | | | | | 0.47 | Example |
| D | 0.07 | 0.31 | 1.92 | 0.011 | 0.0007 | 0.067 | 0.041 | 0.028 | 0.0009 | 0.0028 | 0.0042 | | | | | | | | | | 0.39 | Example |
| E | 0.10 | 0.65 | 1.21 | 0.010 | 0.0029 | 0.022 | 0.023 | 0.035 | 0.0020 | 0.0033 | 0.0034 | | | | | | | | | | 0.30 | Example |
| F | 0.08 | 0.31 | 1.43 | 0.005 | 0.0028 | 0.018 | 0.014 | 0.049 | 0.0138 | 0.0013 | 0.0072 | | | | | | | | | | 0.32 | Example |
| G | 0.09 | 0.29 | 1.19 | 0.015 | 0.0024 | 0.014 | 0.052 | 0.031 | 0.0046 | 0.0023 | 0.0020 | 0.65 | | | | | | | | | 0.33 | Example |
| H | 0.10 | 0.12 | 1.72 | 0.002 | 0.0012 | 0.023 | 0.038 | 0.015 | 0.0008 | 0.0029 | 0.0045 | | 0.98 | | | | | | | | 0.45 | Example |
| I | 0.08 | 0.52 | 0.96 | 0.005 | 0.0037 | 0.057 | 0.029 | 0.076 | 0.0065 | 0.0035 | 0.0048 | | | 0.64 | | | | | | | 0.37 | Example |
| J | 0.11 | 0.49 | 1.75 | 0.005 | 0.0022 | 0.016 | 0.011 | 0.022 | 0.0028 | 0.0030 | 0.0078 | | | | 0.45 | | | | | | 0.49 | Example |
| K | 0.07 | 0.36 | 1.25 | 0.007 | 0.0006 | 0.009 | 0.007 | 0.023 | 0.0019 | 0.0015 | 0.0026 | | | | | 0.06 | | | | | 0.29 | Example |
| L | 0.06 | 0.60 | 1.65 | 0.011 | 0.0041 | 0.008 | 0.025 | 0.065 | 0.0014 | 0.0046 | 0.0009 | | | | | | 0.21 | | | | 0.34 | Example |
| M | 0.09 | 0.09 | 1.89 | 0.004 | 0.0025 | 0.026 | 0.014 | 0.036 | 0.0022 | 0.0038 | 0.0026 | | | | | | | 0.0015 | | | 0.41 | Example |
| N | 0.10 | 0.19 | 1.73 | 0.014 | 0.0033 | 0.029 | 0.033 | 0.036 | 0.0007 | 0.0054 | 0.0028 | | | | | | | | 0.0029 | | 0.39 | Example |
| O | 0.09 | 0.51 | 1.63 | 0.017 | 0.0043 | 0.031 | 0.007 | 0.023 | 0.0031 | 0.0023 | 0.0017 | | | | | | | | | 0.0081 | 0.36 | Example |
| P | 0.08 | 0.38 | 1.31 | 0.008 | 0.0013 | 0.023 | 0.009 | 0.027 | 0.0013 | 0.0048 | 0.0036 | 0.39 | 1.41 | | | | | | | | 0.42 | Example |
| Q | 0.10 | 0.20 | 0.57 | 0.006 | 0.0031 | 0.012 | 0.043 | 0.029 | 0.0038 | 0.0032 | 0.0039 | | 0.61 | 0.55 | 0.12 | | | | | 0.0052 | 0.37 | Example |
| R | 0.06 | 0.45 | 1.46 | 0.014 | 0.0011 | 0.061 | 0.013 | 0.064 | 0.0027 | 0.0016 | 0.0016 | 0.25 | | | 0.04 | | | 0.0023 | | | 0.33 | Example |
| S | 0.08 | 0.23 | 1.65 | 0.013 | 0.0019 | 0.032 | 0.035 | 0.033 | 0.0013 | 0.0051 | 0.0037 | 0.20 | 0.25 | 0.45 | 0.24 | 0.03 | | | | | 0.53 | Example |
| T | 0.11 | 0.37 | 1.35 | 0.003 | 0.0026 | 0.022 | 0.073 | 0.018 | 0.0043 | 0.0031 | 0.0035 | 0.83 | 0.26 | | 0.12 | | | | | | 0.43 | Example |
| U | 0.10 | 0.17 | 1.22 | 0.035 | 0.0018 | 0.016 | 0.015 | 0.039 | 0.0022 | 0.0021 | 0.0050 | | | | | | | | | | 0.30 | Comparative example |
| V | 0.08 | 0.48 | 1.76 | 0.009 | 0.0076 | 0.026 | 0.029 | 0.056 | 0.0015 | 0.0022 | 0.0031 | | | | | | | | | | 0.37 | Comparative example |
| W | 0.07 | 0.33 | 2.21 | 0.016 | 0.0025 | 0.031 | 0.001 | 0.013 | 0.0012 | 0.0046 | 0.0061 | | | | | | | | | | 0.44 | Comparative example |
| X | 0.10 | 0.11 | 1.48 | 0.009 | 0.0035 | 0.025 | 0.034 | 0.042 | 0.0001 | 0.0184 | 0.0052 | | | | | | | | | | 0.35 | Comparative example |
| Y | 0.06 | 0.25 | 2.58 | 0.012 | 0.0031 | 0.018 | 0.020 | 0.033 | 0.0034 | 0.0015 | 0.0042 | | | | | | | | | | 0.49 | Comparative example |
| Z | 0.11 | 0.31 | 1.89 | 0.009 | 0.0016 | 0.035 | 0.009 | 0.022 | 0.0009 | 0.0018 | 0.0022 | | | 0.55 | 0.25 | | | | | | 0.59 | Comparative example |

*1: The remainder is composed of Fe and incidental impurities.

*2: Ceq=[C]+[Mn]/6+([Cr]+[Mo]+[V])/5+([Cu]+[Ni])/15, wherein each element symbol denotes the corresponding element content (mass%) and is 0 in the absence of the element.

*3: Blanks represent no intentional addition and include not only additive-free (0%) but also incidental inclusion.

[Table 2]

| No. | Steel grade | Thickness t (mm) | Ceq | 0.0004t+0.25 | Average cooling rate when the temperature at the center of the thickness of a slab in continuous casting ranges from 1600°C to 1500°C (°C/s) | Slab heating temperature (°C) | Total rolling reduction ratio when the temperature at the center of the thickness of a steel plate is above 8250[Nb]+770°C (%) | Total rolling reduction ratio when the temperature at the center of the thickness of a steel plate is 8250[Nb]+770°C or lower (%) | Average cooling rate at the center of the thickness of a steel plate between 700°C and 550°C (°C/s) | 2500t^{-1.7} | Tempering temperature (°C) |
|---|---|---|---|---|---|---|---|---|---|---|---|
| 1 | A | 75 | 0.29 | 0.28 | 0.16 | 1040 | 50 | 52 | 3.3 | 1.6 | - |
| 2 | B | 110 | 0.43 | 0.29 | 0.13 | 1140 | 29 | 50 | 2.4 | 0.8 | 500 |
| 3 | C | 170 | 0.47 | 0.32 | 0.11 | 1070 | 26 | 26 | 0.8 | 0.4 | - |
| 4 | D | 120 | 0.39 | 0.30 | 0.15 | 1160 | 40 | 35 | 2.1 | 0.7 | - |
| 5 | E | 51 | 0.30 | 0.27 | 0.20 | 1050 | 50 | 67 | 10.8 | 3.1 | 480 |
| 6 | F | 90 | 0.32 | 0.29 | 0.18 | 1080 | 50 | 42 | 2.6 | 1.2 | - |
| 7 | G | 70 | 0.33 | 0.28 | 0.13 | 1120 | 37 | 57 | 4.3 | 1.8 | - |
| 8 | H | 82 | 0.45 | 0.28 | 0.22 | 1130 | 55 | 37 | 5.8 | 1.4 | 470 |
| 9 | I | 140 | 0.37 | 0.31 | 0.14 | 1080 | 34 | 32 | 1.5 | 0.6 | - |
| 10 | J | 68 | 0.49 | 0.28 | 0.21 | 1070 | 63 | 44 | 7.8 | 1.9 | 460 |
| 11 | K | 55 | 0.29 | 0.27 | 0.12 | 1180 | 69 | 42 | 12.2 | 2.7 | 320 |
| 12 | L | 40 | 0.34 | 0.27 | 0.15 | 1060 | 65 | 63 | 15.8 | 4.7 | - |
| 13 | M | 83 | 0.41 | 0.28 | 0.16 | 1110 | 63 | 28 | 6.1 | 1.4 | - |
| 14 | N | 110 | 0.39 | 0.29 | 0.13 | 1020 | 29 | 50 | 1.9 | 0.8 | - |
| 15 | O | 120 | 0.36 | 0.30 | 0.12 | 1150 | 40 | 35 | 1.6 | 0.7 | - |
| 16 | P | 163 | 0.42 | 0.32 | 0.20 | 1120 | 29 | 26 | 0.9 | 0.4 | - |
| 17 | Q | 156 | 0.37 | 0.31 | 0.17 | 1100 | 28 | 30 | 1.0 | 0.5 | 620 |
| 18 | R | 94 | 0.33 | 0.29 | 0.19 | 1030 | 53 | 35 | 2.5 | 1.1 | - |
| 19 | S | 83 | 0.53 | 0.28 | 0.17 | 1080 | 42 | 55 | 3.0 | 1.4 | 510 |
| 20 | T | 73 | 0.43 | 0.28 | 0.18 | 1050 | 29 | 67 | 4.1 | 1.7 | - |
| 21 | U | 64 | 0.30 | 0.28 | 0.13 | 1130 | 38 | 60 | 8.4 | 2.1 | - |
| 22 | V | 58 | 0.37 | 0.27 | 0.12 | 1110 | 31 | 60 | 11.1 | 2.5 | 550 |
| 23 | W | 90 | 0.44 | 0.29 | 0.15 | 1150 | 50 | 42 | 3.6 | 1.2 | - |
| 24 | X | 45 | 0.35 | 0.27 | 0.12 | 1070 | 29 | 70 | 12.5 | 3.9 | - |
| 25 | Y | 170 | 0.49 | 0.32 | 0.13 | 1040 | 26 | 26 | 0.8 | 0.4 | - |
| 26 | Z | 70 | 0.59 | 0.28 | 0.11 | 1050 | 40 | 38 | 3.9 | 1.8 | - |
| 27 | E | 170 | 0.30 | 0.32 | 0.16 | 1160 | 26 | 26 | 0.7 | 0.4 | - |
| 28 | K | 165 | 0.29 | 0.32 | 0.14 | 1100 | 28 | 26 | 0.7 | 0.4 | - |
| 29 | L | 75 | 0.34 | 0.28 | 0.12 | 930 | 65 | 30 | 3.1 | 1.6 | - |
| 30 | P | 63 | 0.42 | 0.28 | 0.18 | 1270 | 70 | 32 | 8.3 | 2.2 | - |
| 31 | G | 83 | 0.33 | 0.28 | 0.06 | 1100 | 62 | 30 | 2.6 | 1.4 | - |
| 32 | O | 100 | 0.36 | 0.29 | 0.05 | 1130 | 31 | 53 | 2.1 | 1.0 | - |
| 33 | B | 63 | 0.43 | 0.28 | 0.15 | 1150 | 65 | 15 | 6.8 | 2.2 | - |
| 34 | C | 150 | 0.47 | 0.31 | 0.19 | 1140 | 44 | 13 | 0.7 | 0.5 | - |
| 35 | R | 96 | 0.33 | 0.29 | 0.11 | 1110 | 50 | 38 | 0.1 | 1.1 | - |
| 36 | A | 49 | 0.29 | 0.27 | 0.20 | 1100 | 73 | 42 | 0.1 | 3.3 | - |
| 37 | N | 73 | 0.39 | 0.28 | 0.12 | 1060 | 17 | 66 | 6.9 | 1.7 | - |
| 38 | O | 95 | 0.36 | 0.29 | 0.13 | 1100 | 15 | 57 | 1.8 | 1.1 | - |

[Table 3]

| No. | Steel grade | Concentration in a segregation zone at the center of the thickness of a steel plate [Mn']+20[P']+50[S'] | Average grain size at the center of the thickness of a steel plate ($\mu$m) | YS at the center of the thickness of a steel plate (MPa) | TS at the center of the thickness of a steel plate (MPa) | Charpy absorbed energy at the center of the thickness of a steel plate at -40°C (J) | Reduction in area in a hydrogen charged tensile test (%) | Evaluation |
|---|---|---|---|---|---|---|---|---|
| 1 | A | 6.9 | 14 | 316 | 460 | 313 | 35 | Example |
| 2 | B | 13.9 | 12 | 450 | 557 | 155 | 29 | Example |
| 3 | C | 8.3 | 13 | 389 | 503 | 276 | 32 | Example |
| 4 | D | 7.2 | 17 | 364 | 499 | 140 | 36 | Example |
| 5 | E | 7.4 | 12 | 323 | 449 | 330 | 33 | Example |
| 6 | F | 6.5 | 15 | 353 | 482 | 205 | 35 | Example |
| 7 | G | 10.2 | 13 | 376 | 525 | 201 | 30 | Example |
| 8 | H | 3.8 | 15 | 517 | 612 | 184 | 41 | Example |
| 9 | I | 7.2 | 13 | 372 | 516 | 215 | 36 | Example |
| 10 | J | 4.5 | 13 | 565 | 671 | 238 | 42 | Example |
| 11 | K | 5.2 | 17 | 382 | 530 | 248 | 40 | Example |
| 12 | L | 10.4 | 10 | 421 | 538 | 175 | 31 | Example |
| 13 | M | 7.1 | 15 | 459 | 580 | 169 | 37 | Example |
| 14 | N | 12.6 | 13 | 408 | 527 | 154 | 30 | Example |
| 15 | O | 13.2 | 16 | 371 | 524 | 139 | 33 | Example |
| 16 | P | 6.6 | 15 | 429 | 568 | 253 | 38 | Example |
| 17 | Q | 6.0 | 15 | 389 | 552 | 218 | 42 | Example |
| 18 | R | 8.5 | 13 | 367 | 512 | 320 | 34 | Example |
| 19 | S | 8.2 | 11 | 573 | 680 | 261 | 35 | Example |
| 20 | T | 6.0 | 11 | 452 | 581 | 267 | 39 | Example |
| 21 | U | 17.5 | 15 | 354 | 536 | 48 | 13 | Comparative example |
| 22 | V | 15.9 | 14 | 442 | 528 | 71 | 20 | Comparative example |
| 23 | W | 11.9 | 16 | 459 | 553 | 159 | 22 | Comparative example |
| 24 | X | 15.8 | 11 | 383 | 536 | 115 | 21 | Comparative example |
| 25 | Y | 16.2 | 15 | 396 | 524 | 69 | 20 | Comparative example |
| 26 | Z | 9.4 | 15 | 536 | 645 | 126 | 18 | Comparative example |
| 27 | E | 8.6 | 18 | 290 | 386 | 258 | 37 | Comparative example |
| 28 | K | 5.3 | 17 | 285 | 384 | 265 | 41 | Comparative example |
| 29 | L | 10.5 | 24 | 402 | 552 | 52 | 32 | Comparative example |
| 30 | P | 5.6 | 29 | 446 | 570 | 49 | 36 | Comparative example |
| 31 | G | 16.8 | 16 | 393 | 553 | 75 | 18 | Comparative example |
| 32 | O | 19.5 | 15 | 396 | 542 | 43 | 10 | Comparative example |
| 33 | B | 13.8 | 26 | 473 | 595 | 26 | 29 | Comparative example |
| 34 | C | 7.8 | 25 | 455 | 572 | 39 | 32 | Comparative example |
| 35 | R | 9.9 | 31 | 284 | 389 | 53 | 34 | Comparative example |
| 36 | A | 6.3 | 28 | 280 | 383 | 56 | 35 | Comparative example |
| 37 | N | 15.9 | 19 | 394 | 510 | 96 | 21 | Comparative example |
| 38 | O | 17.4 | 19 | 336 | 489 | 86 | 15 | Comparative example |

The results in Table 3 show that the steel plates with a very large thickness up to 170 mm satisfying the conditions of the present invention simultaneously had high strength at the center of the thickness of the steel plate, high toughness at the center of the thickness of the steel plate, and high delayed fracture resistance in the weld zone.

In contrast, the steel plates according to the comparative examples not satisfying the conditions of the present invention had low strength, toughness, or delayed fracture resistance in the weld zone.

For example, the steel plate of No. 21 has a high P content and is therefore brittle and has low toughness and delayed fracture resistance in the segregation zone at the center of the thickness of the steel plate.

The steel plate of No. 22 has a high S content and is therefore brittle and has low delayed fracture resistance in the segregation zone at the center of the thickness of the steel plate.

The steel plate of No. 23 has a low Ti content and therefore has low delayed fracture resistance in the weld zone.

The steel plate of No. 24 has a low Ca content, and therefore S cannot be fixed as a sulfide. Thus, the delayed fracture resistance is low in the segregation zone at the center of the thickness of the steel plate.

The steel plate of No. 25 has a high Mn content and is therefore brittle and has low delayed fracture resistance in the segregation zone at the center of the thickness of the steel plate.

The steel plate of No. 26 has a high Ceq, and therefore the weld zone has a microstructure with very high strength. This results in low delayed fracture resistance.

The steel plates of Nos. 27 and 28 have a low Ceq with respect to their thicknesses and therefore have low strength (YS, TS) at the center of the thickness of each steel plate.

The steel plate of No. 29 has a low slab heating temperature, and therefore Nb with a recrystallization inhibiting effect remains undissolved as precipitates. This results in controlled rolling with a small grain refining effect and low toughness.

The steel plate of No. 30 has a high heating temperature and therefore has a large grain size at the beginning of hot rolling and also has a large grain size in the final microstructure, which results in low toughness.

The steel plates of Nos. 31 and 32 have a low cooling rate in the slab casting and therefore have concentrated segregation at the center of the thickness of each sheet plate and have low delayed fracture resistance and toughness.

The steel plates of Nos. 33 and 34 have low toughness due to insufficient rolling reduction in the non-recrystallization region and coarse microstructure.

The steel plates of Nos. 35 and 36 have a low cooling rate in the cooling after the hot rolling with respect to their thicknesses and therefore have low strength. Furthermore, the grain size of 20 $\mu$m or more results in low toughness.

The steel plates of Nos. 37 and 38 have a low rolling reduction ratio in the recrystallization temperature range and insufficient redistribution of the segregation elements by recrystallization, which result in concentrated center segregation and low delayed fracture resistance.

**Claims**

1. A steel plate with a chemical composition comprising, on a mass percent basis:

    C: 0.04% to 0.12%;
    Si: 0.03% to 0.70%;
    Mn: 0.30% to 2.30%;
    P: 0.020% or less;
    S: 0.0050% or less;
    Nb: 0.005% to 0.060%;
    Ti: 0.005% to 0.100%;
    Al: 0.001% to 0.100%;
    Ca: 0.0005% to 0.0200%;
    O: 0.01% or less; and
    N: 0.01% or less,
    and optionally one or two or more selected from the group consisting of
    Cu: 2.00% or less;
    Cr: 1.50% or less;
    Mo: 1.00% or less;
    V: 0.30% or less;
    B: 0.0100% or less;
    W: 0.50% or less;
    Mg: 0.0200% or less; and
    REM: 0.0500% or less,
    the remainder being Fe and incidental impurities,
    wherein Ceq defined by the following formula (1) and a thickness t [mm] of the steel plate satisfy $0.0004t + 0.25 \leq Ceq \leq 0.55$,
    a steel microstructure has an average grain size of 20 $\mu$m or less at a center of a thickness of the steel plate, and a concentration of Mn, a concentration of P, and a concentration of S in a segregation zone at the center of the thickness of the steel plate satisfy the following formula (2):

$$Ceq = [C] + [Mn]/6 + ([Cr] + [Mo] + [V])/5 + ([Cu] + [Ni])/15 \quad (1)$$

$$[Mn^*] + 20[P^*] + 50[S^*] \leq 15 \quad (2)$$

    wherein each element symbol in the formula (1) denotes the corresponding element content, in mass%, and is 0 in the absence of the element, and each element symbol in the formula (2) denotes the concentration, in mass%, of the corresponding element in the segregation zone at the center of the thickness of the steel plate and is 0 in the absence of the element, wherein the steel plate has a yield strength of 300 MPa or more and a tensile strength of 400 MPa or more at the center of the thickness of the steel plate in a tensile test high strength and an impact absorbed energy of 60 J or more at the center of the thickness of the steel plate in a Charpy impact absorption test at -40°C, wherein yield strength, tensile strength and impact absorbed energy are measured according to the methods disclosed in the description.

2. A method for manufacturing the steel plate according to Claim 1, comprising:

    producing a slab with the chemical composition at an average cooling rate of 0.10°C/s or more in a temperature range in which a temperature at a center of a thickness of the slab in continuous casting ranges from 1600°C to 1500°C;
    heating the slab in a temperature range of 1000°C to 1200°C;
    hot-rolling the heated slab at a total rolling reduction ratio of 25% or more in a temperature range in which a temperature at the center of the thickness of the slab is above (8250[Nb] + 770°C) and at a total rolling reduction ratio of 25% or more in a temperature range in which the temperature at the center of the thickness of the slab is (8250[Nb] + 770°C) or lower; and

performing cooling at an average cooling rate of 2500 × $t^{-1.7}$°C/s or more in a temperature range of 700°C to 550°C at the center of the thickness of the steel plate, wherein t [mm] denotes the thickness of the steel plate.

3. The method for manufacturing the steel plate according to Claim 2, wherein after the cooling tempering is performed at a tempering temperature of 650°C or less.

**Patentansprüche**

1. Ein Stahlblech mit einer chemischen Zusammensetzung, die auf Massenprozentbasis Folgendes umfasst:

C: 0,04% bis 0,12%;
Si: 0,03% bis 0,70%;
Mn: 0,30% bis 2,30%;
P: 0,020% oder weniger;
S: 0,0050% oder weniger;
Nb: 0,005% bis 0,060%;
Ti: 0,005% bis 0,100%;
Al: 0,001% bis 0,100%;
Ca: 0,0005% bis 0,0200%;
O: 0,01% oder weniger; und
N: 0,01% oder weniger,
und gegebenenfalls ein oder zwei oder mehr, ausgewählt aus der Gruppe bestehend aus
Cu: 2,00% oder weniger;
Cr: 1,50% oder weniger;
Mo: 1,00% oder weniger;
V: 0,30% oder weniger;
B: 0,0100% oder weniger;
W: 0,50% oder weniger;
Mg: 0,0200% oder weniger; und
REM: 0,0500% oder weniger,
der Rest sind Fe und zufällige Verunreinigungen,
wobei Ceq, definiert durch die folgende Formel (1), und eine Dicke t [mm] der Stahlplatte 0,0004t + 0,25≤ Ceq≤ 0,55 erfüllen,
ein Stahlmikrogefüge eine durchschnittliche Korngröße von 20 $\mu$m oder weniger in der Mitte der Dicke des Stahlblechs aufweist, und
eine Mn-Konzentration, eine P-Konzentration und eine S-Konzentration in einer Entmischungszone in der Mitte der Dicke des Stahlblechs die folgende Formel (2) erfüllen:

$$Ceq = [C] + [Mn]/6 + ([Cr] + [Mo] + [V])/5 + ([Cu] + [Ni])/15 \ (1)$$

$$[Mn^*] + 20[P^*] + 50[S^*]\leq 15 \ (2)$$

wobei jedes Elementsymbol in der Formel (1) das entsprechende Element bezeichnet Gehalt in Masse-% bezeichnet und in Abwesenheit des Elements 0 ist, und jedes Elementsymbol in der Formel (2) die Konzentration in Masse-% des entsprechenden Elements in der Entmischungszone in der Mitte der Dicke der Stahlplatte bezeichnet und in Abwesenheit des Elements 0 ist, wobei das Stahlblech eine Streckgrenze von 300 MPa oder mehr und eine Zugfestigkeit von 400 MPa oder mehr in der Mitte der Dicke des Stahlblechs in einem Zugversuch mit hoher Festigkeit und eine Kerbschlagarbeit von 60 J oder mehr in der Mitte der Dicke des Stahlblechs in einem Charpy-Schlagabsorptionstest bei -40°C aufweist, wobei die Streckgrenze, die Zugfestigkeit und die Kerbschlagarbeit gemäß den in der Beschreibung offenbarten Verfahren gemessen werden.

2. Ein Verfahren zur Herstellung der Stahlplatte nach Anspruch 1, umfassend:

Herstellung einer Bramme mit der chemischen Zusammensetzung bei einer durchschnittlichen Abkühlungsgeschwindigkeit von 0,10°C/s oder mehr in einem Temperaturbereich, in dem die Temperatur in der Mitte der Dicke der Bramme beim Stranggießen zwischen 1600°C und 1500°C liegt;

Erwärmung der Bramme in einem Temperaturbereich von 1000°C bis 1200°C;

Warmwalzen der erwärmten Bramme mit einem Gesamtwalzreduktionsverhältnis von 25 % oder mehr in einem Temperaturbereich, in dem die Temperatur in der Mitte der Dicke der Bramme über (8250[Nb] + 770° C) liegt, und mit einem Gesamtwalzreduktionsverhältnis von 25 % oder mehr in einem Temperaturbereich, in dem die Temperatur in der Mitte der Dicke der Bramme (8250[Nb] + 770° C) oder niedriger ist; und

Durchführen einer Abkühlung mit einer durchschnittlichen Abkühlgeschwindigkeit von $2500 \times t^{-1.7}$° C/s oder mehr in einem Temperaturbereich von 700°C bis 550°C in der Mitte der Dicke der Stahlplatte, wobei t [mm] die Dicke der Stahlplatte bezeichnet.

3. Das Verfahren zur Herstellung des Stahlblechs nach Anspruch 2, wobei nach dem Abkühlen ein Anlassen bei einer Anlasstemperatur von 650°C oder weniger erfolgt.

**Revendications**

1. Plaque d'acier ayant une composition chimique comprenant, sur une base de pourcentage massique :

C : 0,04 % à 0,12 % ;
Si: 0,03 % à 0,70 % ;
Mn : 0,30 % à 2,30 % ;
P : 0,020 % ou moins ;
S : 0,0050 % ou moins ;
Nb : 0,005 % à 0,060 % ;
Ti : 0,005 % à 0,100 % ;
Al : 0,001 % à 0,100 % ;
Ca : 0,0005 % à 0,0200 % ;
O : 0,01 % ou moins ; et
N : 0,01 % ou moins,
et éventuellement un ou deux éléments ou plus choisis dans le groupe constitué par
Cu : 2,00 % ou moins ;
Cr : 1,50 % ou moins ;
Mo : 1,00 % ou moins ;
V : 0,30 % ou moins ;
B : 0,0100 % ou moins ;
W : 0,50 % ou moins ;
Mg : 0,0200 % ou moins ; et
Terres rares : 0,0500 % ou moins,
le reste étant du Fe et des impuretés inévitables,
dans laquelle Ceq défini par la formule (1) suivante et une épaisseur t [mm] de la plaque d'acier satisfont à $0,0004t + 0,25 \leq Ceq \leq 0,55$,
une microstructure d'acier a une grosseur de grain moyenne de 20 μm ou moins au niveau d'un centre d'une épaisseur de la plaque d'acier, et
une concentration de Mn, une concentration de P et une concentration de S dans une zone de ségrégation au centre de l'épaisseur de la plaque d'acier satisfont à la formule (2) suivante :

$$Ceq = [C] + [Mn]/6 + ([Cr] + [Mo] + [V])/5 + ([Cu] + [Ni])/15 \tag{1}$$

$$[Mn^*] + 20[P^*] + 50[S^*] \leq 15 \tag{2}$$

où chaque symbole d'élément dans la formule (1) représente la teneur de l'élément correspondant, en % massique, et vaut 0 en l'absence de l'élément, et chaque symbole d'élément dans la formule (2) représente la concentration, en % massique, de l'élément correspondant dans la zone de ségrégation au centre de l'épaisseur de la plaque d'acier et vaut 0 en l'absence de l'élément, dans laquelle la plaque d'acier a une limite d'élasticité de 300 MPa ou plus et une résistance à la traction de 400 MPa ou plus au centre de l'épaisseur de la plaque d'acier lors d'un essai de traction de résistance élevée et une énergie de choc absorbée de 60 J ou plus au centre de l'épaisseur de la plaque d'acier lors d'un essai d'absorption de choc Charpy à -40 °C, dans laquelle la limite d'élasticité, la résistance à la traction et l'énergie de choc absorbée sont mesurées conformément aux méthodes divulguées dans la description.

2.  Procédé de fabrication de la plaque d'acier selon la revendication 1, comprenant :

la production d'une brame ayant la composition chimique à une vitesse de refroidissement moyenne de 0,10 °C/s ou plus dans une plage de température dans laquelle une température au niveau d'un centre d'une épaisseur de la brame lors d'une coulée continue varie de 1 600 °C à 1 500 °C ;
le chauffage de la brame dans une plage de température de 1 000 °C à 1 200 °C ;
le laminage à chaud de la brame chauffée à un taux de réduction total par laminage de 25 % ou plus dans une plage de température dans laquelle une température au centre de l'épaisseur de la brame est au-dessus de (8 250[Nb] + 770 °C) et à un taux de réduction total par laminage de 25 % ou plus dans une plage de température dans laquelle la température au centre de l'épaisseur de la brame est égale à (8 250[Nb] + 770 °C) ou inférieure ; et
la réalisation d'un refroidissement à une vitesse de refroidissement moyenne de 2 500 × t$^{-1,7}$ °C/s ou plus dans une plage de température de 700 °C à 550 °C au niveau du centre de l'épaisseur de la plaque d'acier, où t [mm] représente l'épaisseur de la plaque d'acier.

3.  Procédé de fabrication de la plaque d'acier selon la revendication 2, dans lequel après le refroidissement, un revenu est effectué à une température de revenu de 650 °C ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49007291 B
- WO 2014132627 A
- EP 3502295 A1
- WO 2018216665 A1

**Non-patent literature cited in the description**

- Investigating the effects of cooling rate and casting speed on continuous casting process using a 3D thermomechanical meshless approach. **VAGHEFI R. et al.** Acta Mechanica. Springer Vienna, 21 August 2018, vol. 229, 4375-4392